# EUROPÄISCHE PATENTSCHRIFT

(11) **EP 0 924 979 B1**
(45) Veröffentlichungstag und Bekanntmachung des Hinweises auf die Patenterteilung: **09.01.2002**
(21) Anmeldenummer: 96932491.2
(22) Anmeldetag: 10.09.1996
(51) Int. Cl.: A01F 12/40

(54) **STROHHÄCKSLER ZUM ZERKLEINERN VON HALMGUT HINTER DEN KORNABSCHEIDEEINRICHTUNGEN EINES MÄHDRESCHERS**
CHAFF CUTTER FOR COMMINUTING HAULM BEHIND THE GRAIN-SEPARATOR DEVICES OF A COMBINE HARVESTER
SYSTEME A HACHER LA PAILLE POUR BROYER DE LA PAILLE DERRIERE LES DISPOSITIFS DE SEPARATION DU GRAIN D'UNE MOISSONNEUSE-BATTEUSE COMBINEE

(43) Veröffentlichungstag der Anmeldung: 30.06.1999
(73) Patentinhaber: BISO B.V., NL-4707 BX Roosendaal (NL)
(72) Erfinder: JAKOBI, Wilhelm, D-88521 Ertingen (DE)
(74) Vertreter: Zinnecker, Armin, Dipl.-Ing.
(86) Internationale Anmeldenummer: EP9603969
(87) Internationale Veröffentlichungsnummer: WO9810634

(56) Entgegenhaltungen:
- EP-A- 0 166 116
- EP-A- 0 538 599
- US-A- 2 842 175
- US-A- 3 103 241
- US-A- 4 532 941
- US-A- 4 637 406

## Beschreibung

Gegenstand der Erfindung ist ein Strohhäcksler, der hinter den Kornabscheideeinrichtungen eines Mähdrescher angeordnet ist und dessen Trennorgane das von den Schüttlern herabfallende Halmgut in kurze Stücke zerteilen.

Die Aufgabe der Erfindung besteht darin, daß einerseits durch eine neuartige, besondere Anordnung des allgemein üblichen Leitbleches, das unter den Schüttlem das von diesen herabfallende Haimgut zum Häckselboden am Einlauf in den Häcksler leitet und andererseits einer neuartigen, besonderen Gestaltung der dem Häcksler nachgeschalteten Verteilerhaube die Annahme des Halmgutes durch die Häckseltrommel sicherer sowie der Auswurf und die Verteilung des gehäckselten Halmgutes auf den Ackerboden gegenüber bestehenden Ausführungen wesentlich verbessert wird.

Eine sichere, störungsfreie Annahme des Strohs durch die Häckseltrommel verhindert Störungen und Verstopfungen in der Strohauslaufhaube des Mähdreschers durch das von den Schüttlern herabfallende Hatmgut und beeinflußt den Häckselvorgang positiv.

Eine gleichmäßige Verteilung des gehäckselten Gutes auf die ganze Schnittbreite durch die Verteilerhaube ist erwünscht für ein störungsfreies Einarbeiten in den Ackerboden und eine möglichst gute Verottung.

Um die Häckseltrommel eines Mähdrescher-Strohhäckslers bildet sich durch die relativ hohe Drehzahl der Häckseltrommel ein mantelförmiger, rotierender Luftring, von dem bei Häckslem bisheriger Ausführung ein erheblicher Anteil in die Strohauslaufhaube abströmt und die Annahme des von den Schüttlem herabfallenden Halmgutes durch die Schneidmesser (19) oder Mitnehmer (35) behindert.

Diese in die Strohhaube abgeströmte Luft fehlt dann zum Auswurf des gehäckselten Halmgutes.

Ein Strohhäcksler zum Zerkleinern von Halmgut hinter der Komabscheideeinrichtung eines Mähdreschers ist aus US-A-2842175 bekannt.

Aus der US-A-3,103,241 ist ein Strohhäcksler nach dem Oberbegriff der Ansprüche 1 bis 4 bekannt.

Aufgabe der Erfindung ist es, die durch den sich bildenden mantelförmigen, rotierenden Luftring entstehenden Nachteile zu vermeiden.

Nach einem ersten Vorschlag wird diese Aufgabe durch die kennzeichnenden Merkmale des Anspruchs 1 gelöst. Eine weitere Lösung ist Gegenstand des Anspruchs 2. Im Anspruch 3 wird eine weitere Lösung der Aufgabe beschrieben. Die Aufgabe wird ferner durch die kennzeichnenden Merkmale des Anspruchs 4 gelöst.

Vorteilhafte Ausgestaltungen sind Gegenstand der Unteransprüche.

Das untere Ende des Leitbleches und der Anfang des Häckselbodens sind durch ein etwa waagrecht liegendes Querblech (15, 34) miteinander verbunden. Vorteilhafterweise wird dieses Querblech nach oben durchgewölbt ausgebildet. Durch diese Kombination von Leitblech-Ende zu Häckslerbodeneinlauf, wird der Luftring um den äußeren Wirkdurchmesser der Häckseltrommel abgerissen und somit verhindert, daß in die Strohauslaufhaube Luft abströmt und dadurch die Annahme des zu häckselnden Halmgutes behindert Vielmehr wird die abgeschnittene Luft in die Drehrichtung der Häckseltrommel umgelenkt, wodurch am Einlauf in den Häckselkasten eine leichte Sogwirkung auf das zu häckselnde Halmgut in Drehrichtung der Häckseltrommel entsteht.

Am Übergang des Häckselkastens in die Verteilerhaube ist bei Häckslern bisheriger Bauart eine ähnliche negative Wirkung des Luftringes gegeben.

Die Höhe des Einlaufes in die Verteilerhaube beträgt bei Häckslem bisheriger Bauart maximal 1/3 des Trommel-Durchmessers.

Daran folgt ein geschlossenes Teil bis zum Anschluß des Häckslers an die Strohauslaufhaube des Mähdreschers. In diesem Teil baut sich ein Luftring auf, der in die Strohauslaufhaube einströmt und das von den Schüttlem herabfallende Halmgut nach oben drückt.

Erfindungsgemäß ist der Übergang vom Häckslergehäuse in die Strohauslaufhaube so gestaltet, daß die freie Austritthöhe etwa 2/3 des Trommeldurchmessers beträgt, wobei die obere Abdeckung der Verteilerhaube am vorderen Ende quer über die Breite ein Blech (23) aufweist, das etwa senkrecht zur Mittelachse der Häckseltrommel gerichtet ist und zum äußeren Trommelumfang etwa 10mm Abstand hat. Dadurch wird der Luftring abgeschnitten und in die Verteilerhaube umgelenkt. Um Luftwirbel in der Verteilerhaube zu vermeiden, wird etwa in der Mitte der Höhe der Verteilerhaube ein querliegendes Trennblech eingebaut, das die Verteilerhaube in zwei Kammern trennt und dessen vordere Kante ebenfalls senkrecht zur Mittelachse der Häckseltrommel bis auf ca. 10mm an den äußeren Umfang der Häckseltrommel heranreicht, wodurch auch hier der Luftring abgeschnitten und die Luft in den Verteilerkasten umgelenkt wird.

Unmittelbar über dem Trennbiech sind am Übergang vom Häckslergehäuse in die Verteilerhaube an beiden Seitenwänden der Verteilerhaube Öffnungen angebracht, durch die Luft einströmen kann. Ein querliegendes Zwischenblech (31) schirmt dabei die einströmende Luft gegenüber dem über dem Trennblech liegenden Raum ab.

Durch die vorstehend beschriebenen Maßnahmen am Häcksler-Einlauf und am Häcksler-Auslauf wird verhindert, daß an diesen Stellen vom Luftring abströmende Luft in die Strohauslaufhaube drückt.

Die Querverteilung des aus der Verteilerhaube ausströmenden gehäckselten Gutes erfolgt in bekannter Art und Weise durch gewölbte, um eine etwa senkrechte Achse verdrehbare Verteilerbleche.

Die Höhenverteilung des ausströmenden Gutes erfolgt durch Verstellen des Trennbleches und des Bodenbleches um waagrechte Achsen im Bereich des Anschlusses der Verteilerhaube an das Häckselgehäuse.

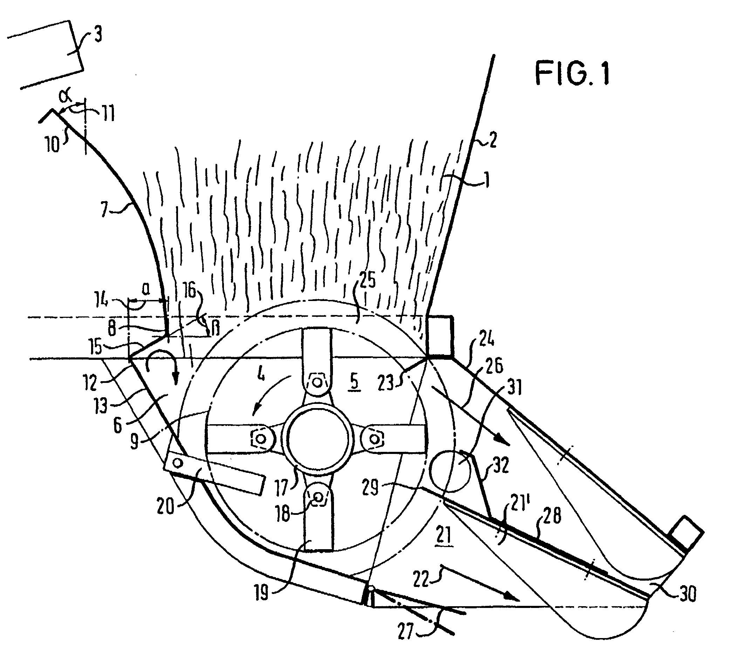

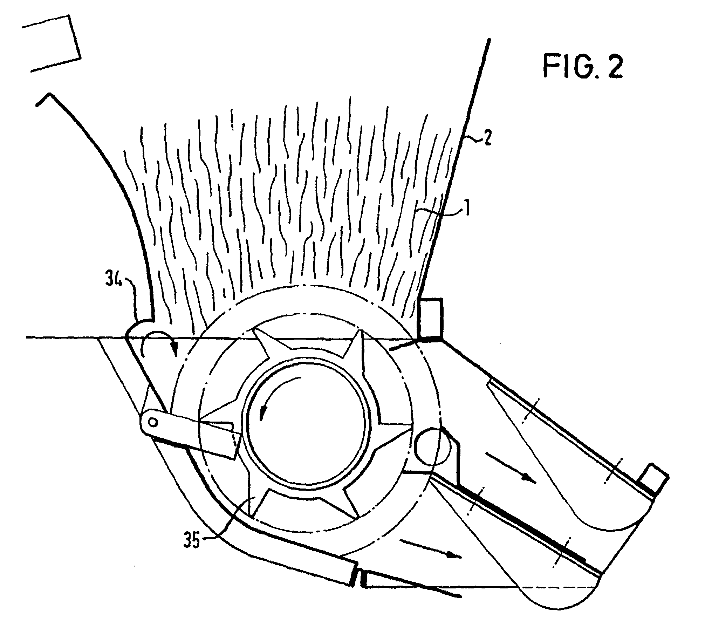

Weitere Details der Erfindung sind in Fig. 1 und Fig. 2 mit der jeweiligen Beschreibung sowie in Unteransprüchen offen gelegt.

Die erfindungsgemäße Gestaltung des Strohhäckslers ist in Fig.1 und Fig. 2 mit den zugehörigen Beschreibungen offen gelegt.

Dabei zeigt:
- Fig. 1: einen Strohhäcksler, bei dem die Schneidmesser auf dem Trommelmantel frei beweglich angebracht sind und gegen starre, am Häckselboden befestigte Gegenmesser arbeiten.
- Fig. 2: einen Strohhäcksler, bei dem auf dem Trommelmantel starre Mitnehmer befestigt sind, die mit am Häckselboden angebrachten Schneidmessem zusammen arbeiten.

Zu Fig.1:
Das zu häckselnde Halmgut (1) fällt in der Strohauslaufhaube (2) von den Schüttlerenden (3) auf die sich in Pfeilrichtung (4) drehende Häckseltrommel (5).

Dabei wird zwischen den Schüttlerenden (3) und dem Einlaufspalt (6) das von den Schüttlern herabfallende Halmgut nach vorne durch ein bogenförmiges Leitblech (7) begrenzt. Das untere Ende (8) des Leitbleches (7) läuft etwa senkrecht auf den äußeren Bereich des äußeren Wirkdurchmessers (9) der Trommel.

Das obere, unter den Schüttlern liegende Ende (10) des Leitbleches kann bis zu einem Winkel a (11) = 45 Grad zur Senkrechten geneigt sein.

Das obere Ende (12) des Häckselbodens (13) ist gegenüber der unteren Kante (8) des Leitbleches um den Abstand a (14) um mindestens 20mm nach vorne in der dargestellten Richtung versetzt.

Das untere Ende (8) des Leitbleches ist mit dem oberen Ende (12) des Häckselbodens durch ein Querblech (15) verbunden, das entsprechend Fig. 1 als gerades Blech gestaltet ist, das von waagrecht bis zu einem Winkel β (16) = max 45 Grad angebracht wird.

Auf der Häckseltrommel (5) sind auf dem Mantelblech (17) eine beliebige Anzahl, um einen Drehpunkt (18) frei bewegliche Schneidmesser (19) angebracht.

Diese erfassen das herabfallende Halmgut und zerkleinern es in beim Durchgang durch die am Häckselboden (13) befestigten Gegenmesser (20).

Das zerkleinerte Halmgut wird aus dem Häckseigehäuse (5) durch die Verteilerhaube (21, 21') in Pfeilrichtung (22) ausgetragen.

Die Verteilerhaube ist im Anschluß an das Häckselgehäuse vom Auslauf unten bis zum Anschluß an die Strohauslaufhaube (2) oben offen, mindestens in einem Bereich der 2/3 des äußeren Wirkdurchmessers (9) der Trommel entspricht. Die vordere Kante (23) des oberen Deckbleches (24) ist so gestaltet, daß es etwa senkrecht zur Trommelmitte bis auf etwa 10mm an den äußeren Wirkdurchmesser (9) der Häckseltrommel (5) heranreicht.

Dadurch wird ein sich um die Häckseltrommel bildender Luftring (25) abgeschnitten und in Pfeilrichtung (26) umgelenkt

Zur Optimierung der Strömungsverhältnisse in der Verteilerhaube wird etwa in der Mitte zwischen dem oberen Deckblech (24) und dem unteren Auslaufblech (27) quer durch die Verteilerhaube ein Zwischenblech (28) angebracht, das mit seiner vorderen Kante (29) auf etwa 5mm an den äußeren Wirkdurchmesser der Häckseltrommel heranreicht und somit auch hier den Luftring (25) abschneidet und die Luft in Pfeilrichtung (22) umlenkt.

Damit ein sich wieder aufbauender Luftring die Luft nicht vom Auslauf (30) der Verteilerhaube holt und dadurch die in Pfeilrichtung (26) ausströmende Luft stört, werden in die Seitenwände der Verteilerhaube Öffnungen (31) angebracht, welche durch ein quer durch den Verteilerkasten gehendes Abdeckblech (32) gegenüber dem Innenraum (20') abgedeckt werden.

zu Fig.2:
Fig. 2 entspricht bis auf die beiden nachstehend angeführten Änderungen genau Fig.1. An Stelle des Querbleches (15) ist ein nach oben gewölbtes Querblech (34) getreten. Die frei beweglichen Häckselmesser (19) wurde durch starre Mitnehmer (35) ersetzt.

## Patentansprüche

1. Strohhäcksler zum Zerkleinern von Halmgut hinter der Komabscheideeinrichtung eines Mähdreschers
mit einem Strohleitblech (7), das zwischen dem Schüttlerende und dem Häckslergehäuse derart bogenförmig gestaltet ist, daß das obere Ende unter den Schüttlem in einem Winkel größer als 25 Grad zur Senkrechten geneigt ist, während das untere Ende am Einlauf in das Häckslergehäuse etwa senkrecht ausläuft, wobei der das obere Ende des Häckslerbodensam Einlauf (12) gegenüber dem unteren Ende des Strohleitbleches (7) durch ein geneigtes Verbindungsblech (15) nach vorne versetzt ist,
**dadurch gekennzeichnet,**
**daß** die Versetzung des Häckslerbodens gegenüber dem Strohleitblech (7) größer als 30 mm ist und daß die Neigung des Verbindungsblechs (15) maximal 45 Grad zur Waagrechten beträgt.

2. Strohhäcksler zum Zerkleinern von Halmgut hinter der Kornabscheideeinrichtung eines Mähdreschers
mit einem Strohleitblech (7), das zwischen dem Schüttlerende und dem Häckslergehäuse derart bogenförmig gestaltet ist, daß das obere Ende unter den Schüttlern in einem Winkel größer als 25 Grad zur Senkrechten geneigt ist, während das untere Ende am Einlauf in das Häckslergehäuse etwa senkrecht ausläuft, wobei das obere Ende des Häckslerbodens am Einlauf (12) gegenüber dem unteren Ende des Strohleitbleches (7) durch ein Verbindungsblech (34) nach vorne versetzt ist,
**dadurch gekennzeichnet,**
**daß** die Versetzung des Häckslerbodens gegenüber dem Strohleitblech (7) größer als 30 mm ist und daß das Verbindungsblech (34) nach oben durchgewölbt ist.

3. Strohhäcksler zum Zerkleinem von Halmgut hinter der Komabscheideeinrichtung eines Mähdreschers
mit einem Strohleitblech (7), das zwischen dem Schüttlerende und dem Häckslergehäuse derart bogenförmig gestaltet ist, daß das obere Ende unter den Schüttlem in einem Winkel größer als 25 Grad zur Senkrechten geneigt ist, während das untere Ende am Einlauf in das Häckslergehäuse etwa senkrecht ausläuft, wobei das obere Ende des Häckslerbodens am Einlauf (12) gegenüber dem unteren Ende des Strohleitbleches (7) durch ein Verbindungsblech (15) nach vorne versetzt ist,
**dadurch gekennzeichnet,**
**daß** die Versetzung des Häckslerbodens gegenüber dem Strohleitblech (7) größer als 30 mm ist und die Höhe der freien Öffnung am Übergang vom Häckslergehäuse in eine Verteilerhaube mindestens 2/3 des äußeren Wirkdurchmessers der Häckseltrommel entspricht
und **daß** das obere Deckblech (24) der Verteilerhaube (21,21') mindestens bis auf 10 mm an den äußeren Wirkdurchmesser der Häckseltrommel (5) heranreicht und daß das Ende des Deckbleches (24) etwa senkrecht auf die Achsmitte der Häckseltrommel gerichtet ist.

4. Strohhäcksler zum Zerkleinern von Halmgut hinter der Kornabscheideeinrichtung eines Mähdreschers
mit einem Strohleitblech (7), das zwischen dem Schüttlerende und dem Häckslergehäuse derart bogenförmig gestaltet ist, daß das obere Ende unter den Schüttlern in einem Winkel größer als 25 Grad zur Senkrechten geneigt ist, während das untere Ende am Einlauf in das Häckslergehäuse etwa senkrecht ausläuft, wobei das obere Ende des Häckslerboden am Einlauf (12) gegenüber dem unteren Ende des Strohleitbleches (7) durch ein Verbindungsblech (15) nach vome versetzt ist,
**dadurch gekennzeichnet,**
**daß** die Versetzung des Häckslerbodens gegenüber dem Strohleitblech (7) größer als 30 mm ist und die Verteilerhaube in der Höhe durch ein Zwischenblech (28) in zwei Kammern geteilt ist, wobei das vordere Ende (29) des Zwischenblechs (28) mindestens bis auf 10 mm an den äußeren Wirkdurchmesser der Häckseltrommel heranreicht und das Ende des Zwischenbleches etwa senkrecht auf die Achsmitte der Häckseltrommel gerichtet ist.

5. Strohhäcksler nach Anspruch 4, **dadurch gekennzeichnet, daß** das Zwischenblech um eine Achse parallel zur Achsmitte der Häckseltrommel schwenkbar ist.

6. Strohhäcksler nach Anspruch 4 oder 5, **dadurch gekennzeichnet, daß** unmittelbar oberhalb des Zwischenbleches (28) in den Seitenwänden der Verteilerhaube Öffnungen (31) angebracht sind, die durch ein quer durch die Verteilerhaube angeordnetes Trennblech (32) gegenüber dem Innenraum der Kammer über dem Zwischenblech (28) abgedeckt sind.

7. Strohhäcksler nach einem der vorhergehenden Ansprüche, **dadurch gekennzeichnet, daß** im Anschluß am unteren Übergang vom Häckslergehäuse in die Verteilerhaube ein Bodenblech angebracht ist, das durch eine Drehachse im Bereich des Übergangs in der Höhe verschwenkt werden kann.

## Claims

1. Chaff cutter for comminuting haulm behind the grain separator device of a combine harvester, having a straw deflector (7) which, between the end of the walker and the cutter housing, is configured in an arc shape such that the upper end underneath the walkers is inclined at an angle greater than 25 degrees to the perpendicular, while the lower end at the inlet to the cutter housing runs out approximately vertically, the upper end of the cutter base at the inlet (12) being offset towards the front by an inclined connecting plate (15) with respect to the lower end of the straw deflector (7), **characterized in that** the offset of the cutter bottom with respect to the straw deflector (7) is greater than 30 mm, and **in that** the inclination of the connecting plate (15) is at most 45 degrees to the horizontal.

2. Chaff cutter for comminuting haulm behind the grain separator device of a combine harvester, having a straw deflector (7) which, between the end of the walker and the cutter housing, is configured in an arc shape such that the upper end underneath the walkers is inclined at an angle greater than 25 degrees to the perpendicular, while the lower end at the inlet to the cutter housing runs out approximately vertically, the upper end of the cutter bottom at the inlet (12) being offset towards the front by an inclined connecting plate (34) with respect to the lower end of the straw deflector (7), **characterized in that** the offset of the cutter bottom with respect to the straw deflector (7) is greater than 30 mm, and **in that** the connecting plate (34) is curved upwards.

3. Chaff cutter for comminuting haulm behind the grain separator device of a combine harvester, having a straw deflector (7) which, between the end of the walker and the cutter housing, is configured in an arc shape such that the upper end underneath the walkers is inclined at an angle greater than 25 degrees to the perpendicular, while the lower end at the inlet to the cutter housing runs out approximately vertically, the upper end of the cutter bottom at the inlet (12) being offset towards the front by an inclined connecting plate (15) with respect to the lower end of the straw deflector (7), **characterized in that** the offset of the cutter bottom with respect to the straw deflector (7) is greater than 30 mm, the height of the free opening at the transition from the cutter housing into a distribution hood corresponds to at least 2/3 of the outer effective diameter of the cutter drum, and **in that** the upper cover plate (24) of the distribution hood (21, 21') extends at least to within 10 mm of the outer effective diameter of the cutter drum (5), and **in that** the end of the cover plate (24) is oriented approximately perpendicularly to the axial centre of the cutter drum.

4. Chaff cutter for comminuting haulm behind the grain separator device of a combine harvester, having a straw deflector (7) which, between the end of the walker and the cutter housing, is configured in an arc shape such that the upper end underneath the walkers is inclined at an angle greater than 25 degrees to the perpendicular, while the lower end at the inlet to the cutter housing runs out approximately vertically, the upper end of the cutter bottom at the inlet (12) being offset towards the front by an inclined connecting plate (15) with respect to the lower end of the straw deflector (7), **characterized in that** the offset of the cutter bottom with respect to the straw deflector (7) is greater than 30 mm, and the distribution hood is divided vertically by an intermediate plate (28) into two chambers, the front end (29) of the intermediate plate (28) extending at least to within 10 mm of the outer effective diameter of the cutter drum, and the end of the intermediate plate being oriented approximately perpendicularly to the axial centre of the cutter drum.

5. Chaff cutter according to Claim 4, **characterized in that** the intermediate plate can be pivoted about an axis parallel to the axial centre of the cutter drum.

6. Chaff cutter according to Claim 4 or 5, **characterized in that** directly above the intermediate plate (28), in the side walls of the distribution hood, openings (31) are made which are covered with respect to the interior of the chamber above the intermediate plate (28) by a divided plate (32) arranged transversely through the distribution hood.

7. Chaff cutter according to one of the preceding claims, **characterized in that**, adjacent to the lower transition from the cutter housing to the distribution hood, a floor plate is fitted, which can be pivoted vertically by means of an axle in the region of the transition.

## Revendications

1. Système à hacher la paille pour le broyage de brins de paille, en aval des dispositifs de séparation du grain d'une moissonneuse-batteuse combinée,
avec une tôle de guidage de paille (7), placée entre l'extrémité de secouage et le carter de hacheur, à une configuration arquée, telle que l'extrémité supérieure, sous le secoueur, est inclinée sous un angle supérieur à 25 degrés par rapport à la verticale, tandis que l'extrémité inférieure, à l'entrée au carter de hacheur évolue à peu près verticalement, l'extrémité supérieure du fond de hacheur, à l'entrée (12) étant décalée vers l'avant par rapport à l'extrémité inférieure de la tôle de guidage de paille (7), au moyen d'une tôle de liaison (15) inclinée,
**caractérisé en ce que**
le décalage entre le fond de hacheur et la tôle de guidage de paille (7) est supérieur à 30 mm et l'inclinaison de la tôle de liaison (15) est au maximum de 45 degrés par rapport à l'horizontale.

2. Système à hacher la paille pour le broyage de brins de paille, derrière le dispositif de séparation de grains d'une moissonneuse-batteuse combinée,
avec une tôle de guidage de paille (7) qui, entre une extrémité de secoueur et le carter de hacheur, est d'une configuration arquée, telle que l'extrémité située sous le secoueur, soit inclinée sous un angle supérieur à 25 degrés par rapport à la verticale, tandis que l'extrémité inférieure, à l'entrée dans le carter de hacheur, évolue à peu près verticalement, l'extrémité supérieure du fond de hacheur à l'entrée (12) étant décalée vers l'avant par rapport à l'extrémité inférieure de la tôle de guidage de paille (7), au moyen d'une tôle de liaison (34),
**caractérisé en ce que**
le décalage, entre le fond de hacheur et la tôle de guidage de paille (7), est supérieur à 30 mm, et **en ce que** la tôle de liaison (34) est incurvée continûment vers le haut.

3. Système à hacher la paille pour le broyage de brins de paille, derrière le dispositif de séparation de grains d'une moissonneuse-batteuse combinée,
avec une tôle de guidage de paille (7) qui, entre une extrémité de secoueur et le carter de hacheur, est d'une configuration arquée, telle que l'extrémité située sous le secoueur, est inclinée sous un angle supérieur à 25 degrés par rapport à la verticale, tandis que l'extrémité inférieure, à l'entrée dans le carter de hacheur, évolue à peu près verticalement, l'extrémité supérieure du fond de hacheur à l'entrée (12) étant décalée vers l'avant par rapport à l'extrémité inférieure de la tôle de guidage de paille (7), au moyen d'une tôle de liaison (15),
**caractérisé en ce que**
le décalage entre le fond de hacheur et la tôle de guidage de paille (7) est supérieur à 30 mm, et la hauteur de l'ouverture libre, à la transition entre le carter de hacheur vers un capot distributeur, correspond au moins à deux tiers du diamètre efficace extérieur du tambour de hacheur,
et **en ce que** la tôle de couverture supérieure (24) du capot distributeur (21, 21') arrive au moins jusqu'à 10 mm du diamètre actif extérieur du tambour de hacheur (5), et **en ce que** l'extrémité de la tôle de couverture (24) est orientée à peu près perpendiculairement, vers l'axe du tambour de hacheur.

4. Système à hacher la paille pour le broyage de brins de paille, derrière le dispositif de séparation de grains d'une moissonneuse-batteuse combinée,
avec une tôle de guidage de paille (7) qui, entre une extrémité de secoueur et le carter de hacheur, est d'une configuration arquée, telle que l'extrémité située sous le secoueur, est inclinée sous un angle supérieur à 25° par rapport à la verticale, tandis que l'extrémité inférieure, à l'entrée dans le carter de hacheur, évolue à peu près verticalement, l'extrémité supérieure du fond de hacheur à l'entrée (12) étant décalée vers l'avant par rapport à l'extrémité inférieure de la tôle de guidage de paille (7), au moyen d'une tôle de liaison (15),
**caractérisé en ce que**
le décalage entre le fond de hacheur de la tôle de guidage de paille (7) est supérieur à 30 mm et le capot distributeur est subdivisé en hauteur, à l'aide d'une tôle intermédiaire (28), en deux chambres, l'extrémité avant (29) de la tôle intermédiaire (28) arrivant au moins jusqu'à 10 mm sur le diamètre actif extérieur du tambour de hacheur et l'extrémité de la tôle intermédiaire étant orientée à peu près perpendiculairement, vers le centre axial du tambour de hacheur.

5. Système à hacher la paille selon la revendication 4, **caractérisé en ce que** la tôle intermédiaire est susceptible de pivoter autour d'un axe, parallèle à l'axe central du tambour de hacheur.

6. Système à hacher la paille selon la revendication 4 ou 5, **caractérisé en ce que**, directement au-dessus de la tôle intermédiaire (28), dans les paroi latérales du capot distibuteur sont ménagées des ouvertures (31), qui sont couvertes au moyen d'une tôle de séparation (32), disposée transversalement à travers le capot distributeur, au-dessus de la tôle intermédiaire (28) par rapport à l'espace intérieur de la chambre.

7. Système à hacher la paille selon l'une des revendications précédentes , **caractérisé en ce qu'**à la suite de la transition inférieure, entre le carter de hacheur et le capot distributeur, est montée une tôle de fond, pouvant être pivotée en hauteur, au moyen d'un axe de rotation placé dans la zone de la transition.
